Europäisches Patentamt

European Patent Office

Office européen des brevets

(19)

(11) Veröffentlichungsnummer: **0 336 124**
**A1**

## (12) EUROPÄISCHE PATENTANMELDUNG

(21) Anmeldenummer: 89103866.3

(22) Anmeldetag: 06.03.89

(51) Int. Cl.⁴: **C08G 75/02**

(30) Priorität: 16.03.88 DE 3808738

(43) Veröffentlichungstag der Anmeldung:
11.10.89 Patentblatt 89/41

(84) Benannte Vertragsstaaten:
**BE DE FR GB IT**

(71) Anmelder: **BAYER AG**

**D-5090 Leverkusen 1 Bayerwerk(DE)**

(72) Erfinder: **Quaas, Gerwolf**
**Bilharzstrasse 11**
**D-5000 Koeln 80(DE)**
Erfinder: **Tresper, Erhard, Dr.**
**Moerser Strasse 394**
**D-4150 Krefeld 11(DE)**
Erfinder: **Kraft, Klaus, Dr.**
**Doerperhofstrasse 15**
**D-4150 Krefeld 1(DE)**
Erfinder: **Reinking, Klaus, Dr.**
**Robert-Stolz-Strasse 16b**
**D-5632 Wermelskirchen 1(DE)**

(54) **Ueberzüge mit Polyarylensulfiden.**

(57) Die Erfindung betrifft Überzüge, die unter Verwendung von linearen, hochmolekularen Polyarylensulfiden, vorzugsweise PPS, durch Extrusionsbeschichten von z.B. langgestrecktem Gut, wie z.B. Drähte, Litzen, optischen Fasern etc., hergestellt werden.

EP 0 336 124 A1

## Überzüge mit Polyarylensulfiden

Die Erfindung betrifft Überzüge, die unter Verwendung von linearen, hochmolekularen Polyarylensulfiden, vorzugsweise PPS, durch Extrusionsbeschichten von z.B. langgestrecktem Gut, wie z.B. Drähte, Litzen, optischen Fasern etc., hergestellt werden.

Aus der DE-PS 2 453 485 ist bekannt, solche Überzüge herzustellen. Diese haben jedoch den Nachteil, daß die hier verwendeten Polyphenylensulfide in Tetrahydrofuran und Methylenchlorid gut löslich sind.

Weiterhin ist aus z.B. EP 67 676 bekannt, Überzüge von langgestrecktem Gut durch Umwickeln mit Folienbändern herzustellen. Diese Form des Überzugs ist jedoch sehr aufwendig und teuer, da die Bänder in einem ersten Verfahrensschritt hergestellt und in einem zweiten, separaten Verfahrensschritt un das zu umhüllende Gut gewickelt werden müssen. Die Produktionsgeschwindigkeit für das Umwickeln ist sehr niedrig und beträgt in der Regel nicht mehr als 100 m/min.

Es wurde gefunden, daß mit linearem Polyarylensulfid, vorzugsweise PPS, Überzüge auf Substrate durch Extrusion aufgebracht werden können.

Gegenstand der Erfindung sind daher Überzüge aus Polyarylensulfiden, dadurch gekennzeichnet, daß ein Polyarylensulfid mit einer Schmelzviskosität $\eta_m$ von 20 bis 1000 Pa.s (bei 300°C und $10^3$ sec$^{-1}$) und einem Gewichtsmittel des relativen Molekulargewichtes $M_w$ (rel) von 25 000 bis 500 000 verwendet wird, dessen Schmelzviskosität $\eta_m$ und dessen Gewichtsmittel des relativen Molekulargewichts $M_w$ sich verhalten wie

$$1g\ \eta_m = 3,48 \bullet 1g M_w(rel) - 14,25 \pm 0,1,$$

vorzugsweise daß $\eta_m$ und $M_w$ sich verhalten wie:

$$1g\ \eta_m = 3,48 \bullet 1g M_w(rel) - 14,25 \pm 0,05.$$

Der besondere Vorteil der erfindungsgemäß geeigneten Polyarylensulfide ist, daß sie die Herstellung glatter, fehlerarmer Isolierschichten bei hohen Abzugsgeschwindigkeiten ermöglichen.

Durch eine während des Herstellprozesses oder nachträglich durchgeführte Thermofixierung, kann eine Erhöhung der mechanischen Eigenschaften, der Kirstallinität und der Temperaturbeständigkeit erreicht werden. Diese Eigenschaften sind von wesentlicher Bedeutung für den Einsatz des Materials in z.B. hochtemperaturbelasteten Kabeln und Leitungen, in isolierten Drähten für Heizungen etc.

Bei der erfindungsgemäßen Herstellung der Überzüge wird die Extrusion mit Massetemperaturen oberhalb des Schmelzpunktes $F_p$ des Polyarylensulfida (z.B. im Falle des Polyphenylensulfids oberhalb 300°C) durchgeführt. Nach Abkühlung der Schmelze nach Aufbringen auf das Substrat auf Temperaturen unterhalb der Glasübergangstemperatur $T_G$ des Polyarylensulfids erfolgt anschließend eine Thermofixierung zwischen $T_G$ und $F_p$. Alternativ kann eine langsame Abkühlung vorgenommen werden, um auf diese Weise die hohen mechanischen Eigenschaften und die Temperaturbeständigkeit der Überzüge zu erreichen.

Erfindungsgemäß verwendbare Polyarylensulfide sind z.B. aus der EP-OS 171 021 bekannt und handelsüblich (z.B. Tedur® der BAYER AG). Sie sind in Tetrahydrofuran und chlorierten Kohlenwasserstoffen (z.B. $CH_2Cl_2$, $CHCl_3$) praktisch unlöslich.

Erfindungsgemäß werden die Polyarylensulfide, vorzugsweise Polyphenylensulfid, durch Extrusion auf das Substrat, z.B. Drähte, Platten, Fasern, Folien usw. aufgebracht.

Die Substrate können aus den unterschiedlichsten Materialien, z.B. Metall, Glas Kunststoffe organischer und anorganischer Natur, Holz, Naturfasern, Gestein, usw. sein.

In einer besonderen Ausführungsform können durch gemeinsame Extrusion von Polyarylensulfiden mit anderen extrusionsfähigen Materialien die mit Polyarylensulfiden überzogenen Formteile hergestellt werden.

Des weiteren können zur Verbesserung der mechanischen Eigenschaften, wie z.B. der Reißfähigkeit und Bruchdehnung, geringe Mengen an geeigneten anderen Polymeren z.B. an Elastomeren und/oder bis zu 30 % Füllstoffen in Form von Pulvern oder Fasern zugegeben werden.

Beispiel 1

Ein Polyarylensulfid (z.B. nach EP-OS 1 71 021) mit einer Viskosität von 200 Pa.s (bei 306°C und $10^3$sec$^{-1}$ gemessen) wurde auf einer handelsüblichen Extrusionslinie zu Isolierungen von Kupferleitern mit 0,6 mm Durchmesser verarbeitet.

Extruder = 80 mm Durchmesser
L/D-Verhältnis = 24:1
Düsendurchmesser = 1,5 mm
Schichtdicke der Isolierung = 0,4 mm

2

Abzugsgeschwindigkeit = 250 m/min
Massetemperatur = 340 °C

| Eigenschaften der Isolierung: | | |
|---|---|---|
| | unbehandelt | nach Thermofixierung bei 200 °C |
| Reißfestigkeit | 42,4 N/mm² | 76,3 N/mm² |
| Dehnung | 172 % | 6,2 % |

Die Isolierungen halten eine glatte, glänzende Oberfläche.

Beispiel 2

Das obengenannte Polyarylensulfid wurde auf der gleichen Anlage zu Isolierungen von Cu-Leitern mit 0,16 mm Schichtdicke Verarbeitet.
Düsendurchmesser = 1,0 mm
Abzugsgeschwindigkeit = 1300 m/min

| Eigenschaften der Isolierung: | | |
|---|---|---|
| | unbehandelt | nach Thermofixierung bei 200 °C |
| Reißfestigkeit | 49 N/mm² | 84,7 N7mm² |
| Reißdehnung | 10,4 % | 3,6 % |
| Oberfläche | | glatt, glänzend |

**Ansprüche**

1. Überzüge aus Polyarylensulfiden, dadurch gekennzeichnet, daß ein Polyarylensulfid mit einer Schmelzviskosität $\eta_m$ von 20 bis 1000 Pa.s und einem Gewichtsmittel des relativen Molekulargewichtes $M_w$ (rel) von 25 000 bis 500 000 verwendet wird, dessen Schmelzviskosität $\eta_m$ und dessen Gewichtsmittel des relativen Molekulargewichts $M_w$ sich verhalten wie
$$1g\ \eta_m = 3{,}48 \bullet 1gM_w(rel) - 14{,}25 \pm 0{,}1,$$
2. Überzüge nach Anspruch 1, dadurch gekennzeichnet, daß $\eta_m$ und $M_w$ sich verhalten wie
$$1g\ \eta_m = 3{,}48 \bullet 1gM_w(rel) - 14{,}25 \pm 0{,}05.$$
3. Überzüge gemäß Anspruch 1, dadurch gekennzeichnet, daß die Überzüge im Extrusionsverfahren hergestellt werden.
4. Überzüge gemäß Anspruch 1, dadurch gekennzeichnet, daß die extrudierten Überzüge thermofixiert werden.
5. Überzüge nach Anspruch 1, dadurch gekennzeichnet, daß sie auf langgestrecktes Gut wie elektrischen Leitermaterialien aus Metallen wie Kupfer und Aluminium, oder optischen Fasern aufgebracht werden.
6. Verwendung der mit Überzügen nach Anspruch 1 beschichteten Substrate als Leitermaterial in z.B. Kabeln, Leitungen, Wicklungen von Spulen und Motoren.

## EUROPÄISCHER RECHERCHENBERICHT

Europäisches
Patentamt

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 171 021 (BAYER)<br>* Ansprüche 35-42; Seite 57, Zeile 26 - Seite 58, Zeile 9 *<br>--- | 1-6 | C 08 G 75/02 |
| D,A | EP-A-0 067 676 (TORAY)<br>* Ansprüche *<br>--- | 1-6 | |
| D,A | DE-A-2 453 485 (PHILLIPS PETROLEUM)<br>* Ansprüche 1,4 *<br>--- | 1-6 | |
| A | EP-A-0 126 369 (BAYER)<br>* Seite 11, Zeilen 3-17 *<br>--- | 1-6 | |
| A | EP-A-0 162 210 (BAYER)<br>* Seite 12, Zeile 20 - Seite 13, Zeile 6 *<br>----- | 1-6 | |
| | | | RECHERCHIERTE SACHGEBIETE (Int. Cl.4)<br><br>C 08 G 75/00 |

Der vorliegende Recherchenbericht wurde für alle Patentansprüche erstellt

| Recherchenort | Abschlußdatum der Recherche | Prüfer |
|---|---|---|
| BERLIN | 12-06-1989 | BOEKER R.B. |